# EUROPEAN PATENT APPLICATION

(11) **EP 4 717 514 A1**
(43) Date of publication of application: **01.04.2026**
(21) Application number: 24810191.7
(22) Date of filing: 06.05.2024
(51) Int. Cl.: B60L 58/10, H02J 7/00

(54) **DATA TRANSMISSION APPARATUS FOR BATTERY PACK, AND CONTROL METHOD, BATTERY SYSTEM, AND DEVICE**

(30) Priority: 22.05.2023 CN 202310587934
(71) Applicant: BYD Company Limited, Shenzhen, Guangdong 518118 (CN)
(72) Inventor: YANG, Yu, Shenzhen, Guangdong 518118 (CN); ZHANG, Shouli, Shenzhen, Guangdong 518118 (CN); SHI, Qian, Shenzhen, Guangdong 518118 (CN); ZENG, Qiuyong, Shenzhen, Guangdong 518118 (CN); SHEN, Xiaofeng, Shenzhen, Guangdong 518118 (CN)
(74) Representative: Mathys & Squire
(86) International application number: PCT/CN2024/091114
(87) International publication number: WO 2024/239944

(57) **Abstract**

A data transmission apparatus for a battery pack, a control method therefor, a battery system, and a device are provided. The battery pack (401) is provided with a battery management system. The data transmission apparatus (100) includes a battery component (11), a first power supply circuit (12), a second power supply circuit (13), and a data transmission module (14) configured to communicatively connect to the battery management system. The data transmission module (14) is configured to receive and transmit battery data sent by the battery management system. The first power supply circuit (12) is electrically connected between the battery component (11) and a power output connection end of the data transmission apparatus (100). The battery component (11) is connected to an input end of the second power supply circuit (13). An output end of the second power supply circuit (13) outputs a preset operating voltage of the data transmission apparatus (100).

## Description

### CROSS-REFERENCE TO RELATED APPLICATIONS

The present disclosure claims priority to Chinese Patent Application No. 202310587934.9, filed on May 22, 2023 and entitled "DATA TRANSMISSION APPARATUS FOR BATTERY PACK, CONTROL METHOD THEREFOR, BATTERY SYSTEM, AND VEHICLE", which is incorporated herein by reference in its entirety.

### TECHNICAL FIELD

The present disclosure relates to the field of communication technologies, and more specifically, to a data transmission apparatus for a battery pack, a control method therefor, a battery system, and a device.

### BACKGROUND

A power battery is an important power source for new energy vehicles. Considering that the state of the power battery is affected by a plurality of intersecting factors in its life cycle, there is a need to monitor the state of the power battery.

In the related art, a 4G communication module is usually added to a BMS (Battery Management System), and a vehicle always supplies power to the BMS, so that battery data detected by the BMS is transmitted to a base station, and then stored on a cloud platform. However, this battery data transmission manner may lead to battery depletion due to continuous operation of the 4G communication module, resulting in the vehicle being unable to start.

### SUMMARY

An objective of embodiments of the present disclosure is to provide a new technical solution that can implement battery data transmission.

According to a first aspect of the present disclosure, a data transmission apparatus for a battery pack is provided. The battery pack is provided with a battery management system. The data transmission apparatus includes a battery component, a first power supply circuit, a second power supply circuit, and a data transmission module configured to communicatively connect to the battery management system. The data transmission module is configured to receive and transmit battery data sent by the battery management system. The first power supply circuit is electrically connected between the battery component and a power output connection end of the data transmission apparatus. The battery component is connected to an input end of the second power supply circuit. An output end of the second power supply circuit outputs a preset operating voltage of the data transmission apparatus.

According to an embodiment of the present disclosure, the power output connection end of the data transmission apparatus is connected to a power input connection end of the battery management system.

According to an embodiment of the present disclosure, the data transmission apparatus further includes a charging circuit, and the charging circuit is electrically connected between a power input connection end of the data transmission apparatus and the battery component.

According to an embodiment of the present disclosure, the power input connection end is connected to the input end of the second power supply circuit.

According to an embodiment of the present disclosure, the data transmission apparatus further includes a connection detection circuit of an external power supply, the connection detection circuit is electrically connected between the power input connection end of the data transmission apparatus and a ground end of the data transmission apparatus; the connection detection circuit includes two resistors connected in series; and a potential point between the two resistors serves as an output end of the connection detection circuit, and outputs, to the data transmission module, a connection detection signal indicating whether the power input connection end is connected to the external power supply.

According to an embodiment of the present disclosure, the first power supply circuit includes a first switch, and a control end of the first switch is connected to a processor of the data transmission module.

According to an embodiment of the present disclosure, the data transmission apparatus further includes a clock wake-up circuit, and a wake-up signal output end of the clock wake-up circuit is connected to a wake-up signal input end of the data transmission module.

According to an embodiment of the present disclosure, the second power supply circuit includes a power supply module, and at least one voltage converter is disposed in the power supply module.

According to an embodiment of the present disclosure, the data transmission module includes a first communication unit configured to communicatively connect to the battery management system, a processor, and a second communication unit configured to communicatively connect to a server.

The first communication unit is configured to receive the battery data sent by the battery management system, wherein an output end of the first communication unit is connected to the processor, to output the received battery data to the processor.

An input end of the second communication unit is connected to the processor, to receive the battery data sent by the processor, and send the received battery data to the server.

According to an embodiment of the present disclosure, the first communication unit is a CAN communication unit, and/or the second communication unit is a mobile communication unit.

According to an embodiment of the present disclosure, the data transmission apparatus further includes a housing, all components of the data transmission apparatus are electrically connected through a circuit board, the circuit board is packaged in the housing, all connection ends of the data transmission apparatus are exposed through the housing, and all the connection ends include the power output connection end.

According to a second aspect of the present disclosure, a control method for a data transmission apparatus is further provided. The data transmission apparatus is the data transmission apparatus according to the first aspect, and the method is implemented by the processor of the data transmission apparatus. The method includes:
when a specified condition is met, controlling the first power supply circuit to continuously supply power to the battery management system of the battery pack through the power output connection end for second specified duration at an interval of first specified duration; and
during continuous power supply to the battery management system, receiving, through the first communication unit, the battery data sent by the battery management system, and sending the battery data to the server through the second communication unit.

According to an embodiment of the present disclosure, the first specified duration is greater than the second specified duration.

According to an embodiment of the present disclosure, the method further includes:
receiving the connection detection signal output by the connection detection circuit, wherein the connection detection circuit is configured to detect whether the power input connection end of the data transmission apparatus is connected to the external power supply.

That the specified condition is met includes that the connection detection signal indicates that the power input connection end is not connected to the external power supply.

According to an embodiment of the present disclosure, the controlling the first power supply circuit to continuously supply power to the battery management system of the battery pack through the power output connection end for second specified duration at an interval of first specified duration includes:
when a wake-up signal output by the clock wake-up circuit is received, controlling the first power supply circuit to be turned on, wherein the first power supply circuit supplies power to the battery management system of the battery pack through power output connection end when the first power supply circuit is turned on, and the clock wake-up circuit outputs the wake-up signal at the interval of the first specified duration when the processor is in a sleep mode; and
when the first power supply circuit is controlled to be turned on for the second specified duration, controlling the first power supply circuit to be disconnected and enter a sleep state again.

According to a third aspect of the present disclosure, a battery system is further provided. The battery system includes:
a battery pack, wherein the battery pack is provided with a battery management system;
a battery, wherein the battery is electrically connected to a power input connection end of the battery pack; and
the data transmission apparatus according to the first aspect, wherein the power output connection end of the data transmission apparatus is electrically connected to the power input connection end of the battery pack.

According to a fourth aspect of the present disclosure, a power-consuming device is further provided, including the battery system according to the third aspect. A battery pack of the battery system is a power battery of the power-consuming device.

A beneficial effect of embodiments of the present disclosure is that the battery component is connected to the input end of the second power supply circuit, and the output end of the second power supply circuit outputs an operating voltage required for the data transmission apparatus, to implement self-power supply of the data transmission apparatus. This further avoids battery depletion due to continuous operation of a 4G communication module in the related art, resulting in a vehicle being unable to start. The first power supply circuit is electrically connected between the battery component and the power output connection end of the data transmission apparatus, so that the battery component can further supply power to an external device through the power output connection end.

According to the following detailed description of example embodiments of this application with reference to the accompanying drawings, other features and advantages of this application become clear.

### BRIEF DESCRIPTION OF DRAWINGS

The accompanying drawings incorporated into this specification and constituting a part of this specification show embodiments of this application, and are used, together with descriptions of the accompanying drawings, to explain the principles of this application.
FIG. 1 is a diagram of a structure of a data transmission apparatus according to some embodiments;
FIG. 2 is a diagram of a structure of a data transmission apparatus according to some other embodiments;
FIG. 3 is a flowchart of a control method for a data transmission apparatus according to some embodiments;
FIG. 4 is a diagram of a hardware structure of a battery system according to some embodiments;
FIG. 5 is a diagram of a hardware structure of a battery system according to some other embodiments; and
FIG. 6 is a diagram of a structure of a vehicle according to some embodiments.

### Reference numerals:

100: data transmission apparatus; 11: battery component; 12: first power supply circuit; 13: second power supply circuit; 14: data transmission module; 15: charging circuit; 16: connection detection circuit; 17: clock wake-up circuit;
14: data transmission module; 141: processor. 142: first communication unit; 143: second communication unit;
400: battery system; 401: battery pack; 402: battery; 600: vehicle.

### DESCRIPTION OF EMBODIMENTS

Example embodiments of this application are described in detail with reference to the accompanying drawings. It should be noted that, unless otherwise specified, relative arrangements, numerical expressions, and values of components and steps described in these embodiments do not limit the scope of this application.

The following description of at least one example embodiment is merely illustrative and shall not be construed as any limitation to this application, and application or use thereof.

Technologies, methods, and devices known by a person of ordinary skill in the art may not be discussed in detail, but the technologies, methods, and devices shall be considered as a part of this specification in appropriate circumstances.

In all examples shown and discussed herein, any specific value should be construed as merely an example rather than a limitation. Therefore, other examples of example embodiments may have different values.

It will be noted that, similar reference numerals and letters represent similar items in the following accompanying drawings. Therefore, once an item is defined in one accompanying drawing, the item does not need to be further discussed in the following accompanying drawings.

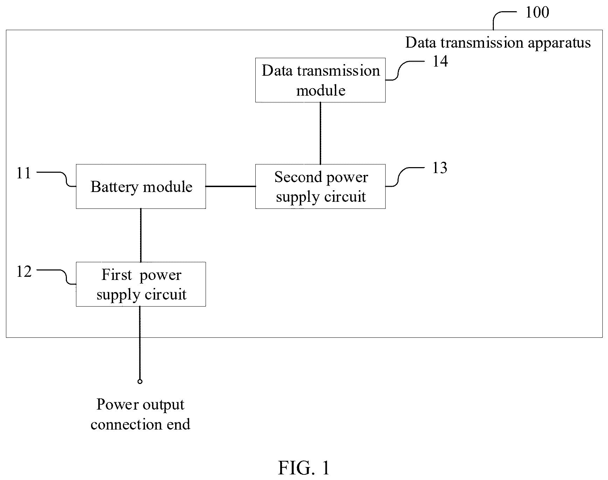

Embodiments of the present disclosure relate to a technical solution for a data transmission apparatus 100 for a battery pack 401. FIG. 1 is a diagram of a structure of a data transmission apparatus 100 for a battery pack 401 according to some embodiments. As shown in FIG. 1, the data transmission apparatus 100 includes a battery component 11, a first power supply circuit 12, a second power supply circuit 13, and a data transmission module 14.

The battery pack 401 is provided with a battery management system that is configured to obtain battery data. The battery data may be data such as a voltage, a current, and a temperature of a battery. A person skilled in the art should understand that specific content of the battery data is not limited herein.

The data transmission module 14 is communicatively connected to the battery management system of the battery pack 401, to receive and transmit battery data sent by the battery management system.

The first power supply circuit 12 is connected between the battery component 11 and a power output connection end of the data transmission apparatus 100. The power output connection end may be connected to an external to-be-powered device, and the first power supply circuit 12 may be configured to convert an output voltage of the battery component 11 into an operating voltage corresponding to the external to-be-powered device, to supply power to the external to-be-powered device.

The battery component 11 is connected to an input end of the second power supply circuit 13. The second power supply circuit 13 is configured to convert the output voltage of the battery component 11 into a preset operating voltage of the data transmission apparatus 100. For example, an operating voltage of a processor 141 is 5 V, and the output voltage of the battery component 11 is 12 V. The second power supply circuit 13 may convert the output voltage of 12 V of the battery component 11 into the operating voltage of 5 V of the processor 141.

According to an embodiment of this application, the battery component 11 is connected to the input end of the second power supply circuit 13, and the output end of the second power supply circuit 13 outputs an operating voltage required for the data transmission apparatus 100, to implement self-power supply of the data transmission apparatus 100. This further avoids depletion of a battery 402 due to continuous operation of a 4G communication module in the related art, resulting in a vehicle being unable to start. The first power supply circuit 12 is electrically connected between the battery component 11 and the power output connection end of the data transmission apparatus 100, so that the battery component 11 can further supply power to the external to-be-powered device through the power output connection end.

In some embodiments, the power output connection end of the data transmission apparatus 100 is connected to a power input connection end of the battery management system.

In this embodiment, the external to-be-powered device may be the battery pack 401, and the battery pack 401 is provided with the battery management system. When the power output connection end of the data transmission apparatus 100 is connected to the power input connection end of the battery management system of the battery pack 401, the first power supply circuit 12 may convert the output voltage of the battery component 11 into an operating voltage required for the battery management system, to supply power to the battery management system. In this connection manner, when the battery pack 401 is removed from an entire vehicle, power is supplied to the battery management system through the data transmission apparatus 100, so that the battery management system normally obtains the battery data. This can avoid a problem that the battery management system is not powered by a power supply and cannot collect the battery data when the battery pack 401 is removed from the vehicle.

In some embodiments, the data transmission apparatus 100 further includes a charging circuit 15, and the charging circuit 15 is electrically connected between a power input connection end of the data transmission apparatus 100 and the battery component 11.

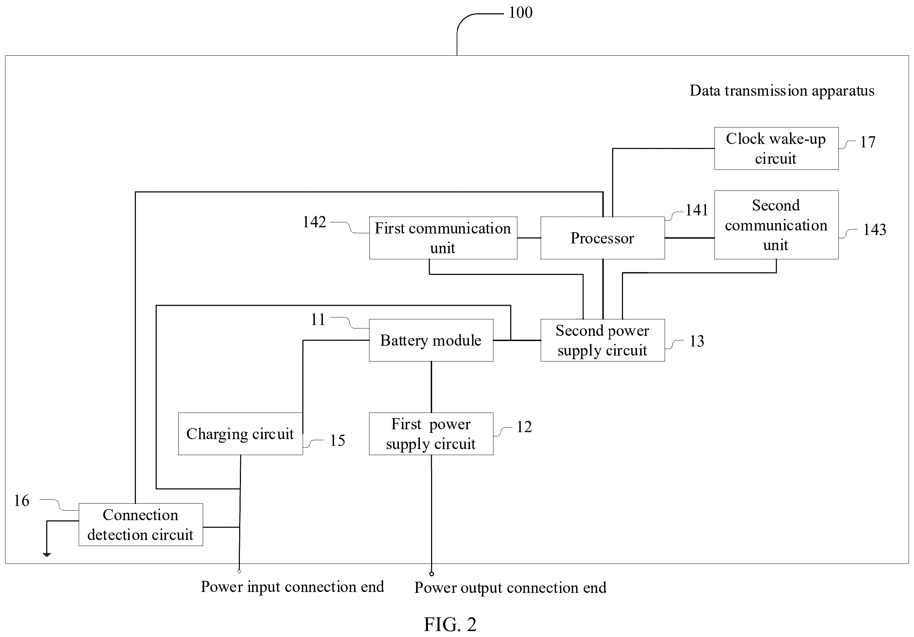

In an embodiment, as shown in FIG. 2, the data transmission apparatus 100 further includes a charging circuit 15. The charging circuit 15 is electrically connected between a power input connection end of the data transmission apparatus 100 and the battery component 11. When the power input connection end of the data transmission apparatus 100 is connected to an external power supply, the charging circuit 15 may convert an output voltage of the external power supply into a charging voltage of the battery component 11, to charge the battery component 11.

For example, the external power supply may be the battery 402. That is, an output end of the battery 402 is connected to the power input connection end of the data transmission apparatus 100, to charge the battery component 11.

According to this embodiment of this application, the charging circuit 15 is electrically connected between the power input connection end of the data transmission apparatus 100 and the battery component 11, to charge the battery component 11. This further avoids a problem that transmission of the battery data cannot be performed due to depletion of the battery component 11.

In some embodiments, the power input connection end is connected to the input end of the second power supply circuit 13.

In this embodiment, the power input connection end may be connected to the input end of the second power supply circuit 13, so that when the power input connection end is connected to an external power supply, the external power supply may directly supply power to the data transmission apparatus 100.

According to this embodiment of this application, the power input connection end is connected to the input end of the second power supply circuit 13, so that a plurality of power supply methods may be provided for the data transmission apparatus 100.

In some embodiments, to automatically control switching of a power supply method when the plurality of power supply methods are provided for the data transmission apparatus 100, the data transmission apparatus 100 in this embodiment of this application further includes a connection detection circuit 16 of an external power supply. The connection detection circuit 16 is electrically connected between the power input connection end and a ground end of the data transmission apparatus 100. The connection detection circuit 16 includes two resistors connected in series. A potential point between the two resistors serves as an output end of the connection detection circuit 16, and outputs, to the data transmission module 14, a connection detection signal indicating whether the power input connection end is connected to the external power supply.

In an embodiment, the data transmission apparatus 100 further includes a connection detection circuit 16 configured to detect whether the power input connection end is connected to the external power supply. One end of the connection detection circuit 16 is connected to the power input connection end of the data transmission apparatus 100, and the other end is connected to a ground end of the data transmission apparatus 100. The connection detection circuit 16 includes two resistors connected in series. A potential point between the two resistors is connected to the processor 141 of the data transmission module 14, to output, to the processor 141, a connection detection signal indicating whether the power input connection end is connected to the external power supply. When the power input connection end is not connected to the external power supply, the connection detection signal is a signal whose potential value at the potential point is 0. When the power input connection end is connected to the external power supply, the connection detection signal is a signal whose potential value at the potential point is not 0.

When receiving the connection detection signal whose potential value at the potential point is 0, the processor 141 controls the input end of the second power supply circuit 13 to connect to the battery component 11, and the battery component 11 supplies power to the data transmission apparatus 100. When receiving the connection detection signal indicating that the potential value at the potential point is not 0, the processor 141 controls the input end of the second power supply circuit 13 to connect to the power input connection end, and the external power supply supplies power to the data transmission apparatus 100.

For example, switching of the foregoing power supply method may be implemented by disposing a single-pole multi-throw switch in the second power supply circuit 13, and switching of a status of the single-pole multi-throw switch corresponds to switching of the power supply method.

In some other examples, switching of the foregoing power supply methods may alternatively be implemented by disposing a single-pole double-throw switch in paths on which different power supply methods are applied. A person skilled in the art should understand that a specific implementation for switching the power supply method is not limited herein.

According to this embodiment of this application, the connection detection circuit 16 of the external power supply is disposed to detect whether the power input connection end is connected to the external power supply, and then, switching of the power supply mode of the data transmission apparatus 100 is controlled based on a detected potential value, thereby implementing flexible switching of the power supply method.

In some embodiments, the second power supply circuit 13 includes a power supply module, and at least one voltage converter is disposed in the power supply module.

In an embodiment, the second power supply circuit 13 includes a power supply module configured to convert a voltage at an input end of the second power supply circuit 13 into operating voltages required for all components of the data transmission apparatus 100. When the operating voltages required for all the components are a same operating voltage, the power supply module is provided with one voltage converter. When the operating voltages required for all the components are different operating voltages, the power supply module is provided with a plurality of voltage converters, to implement conversion of a plurality of voltages.

According to this embodiment of this application, the power supply module configured to perform voltage conversion is disposed in the second power supply circuit 13, to convert the voltage at the input end of the second power supply circuit 13 into the operating voltages required for the data transmission apparatus 100, ensuring normal operation of all the components of the data transmission apparatus 100.

In some embodiments, the first power supply circuit 12 includes a first switch, and a control end of the first switch is connected to a processor 141 of the data transmission module 14.

In an embodiment, the first power supply circuit 12 includes a first switch. When the power output connection end of the data transmission apparatus 100 is connected to the external to-be-powered device, a processor 141 of the data transmission module 14 may control the first switch to be turned on, to supply power to the external to-be-powered device. The external to-be-powered device may be the battery pack 401, an electronic device, or the like. If the first switch is turned off, no external power is supplied.

According to this embodiment of this application, the first power supply circuit 12 includes the first switch, and the control end of the first switch is connected to the processor 141 of the data transmission module 14, so that the data transmission apparatus 100 can be flexibly controlled to supply external power.

In some embodiments, to reduce power consumption of the data transmission apparatus 100, the data transmission apparatus 100 in this embodiment of this application further includes a clock wake-up circuit 17. A wake-up signal output end of the clock wake-up circuit 17 is connected to a wake-up signal input end of the processor 141 of the data transmission module 14.

In an embodiment, the clock wake-up circuit 17 is configured to output a wake-up signal. A wake-up signal input end of the processor 141 of the data transmission module 14 is connected to a wake-up signal output end of the clock wake-up circuit 17, to receive the wake-up signal output by the clock wake-up circuit 17. The processor 141 starts operating when receiving the wake-up signal.

In some embodiments, the data transmission module 14 includes a first communication unit 142 configured to communicatively connect to the battery management system, the processor 141, and a second communication unit 143 configured to communicatively connect to a server.

The first communication unit 142 is configured to receive the battery data sent by the battery management system, where an output end of the first communication unit 142 is connected to the processor 141, to output the received battery data to the processor 141.

An input end of the second communication unit 143 is connected to the processor 141, to receive the battery data sent by the processor 141, and send the received battery data to the server.

In an embodiment, as shown in FIG. 2, a first communication unit 142 is communicatively connected to the battery management system, to receive the battery data sent by the battery management system.

In some embodiments, the first communication unit 142 may be a CAN communication unit. The CAN communication unit is connected to a communication connection end of the data transmission apparatus 100, to connect to a CAN communication module of the battery pack 401 through the communication connection end, to receive the battery data. An output end of the first communication unit 142 is connected to the processor 141, to output the received battery data to the processor 141. The processor 141 may be a central processing unit CPU, a microprocessor MCU, or the like. This is not limited herein.

The processor 141 is connected to the input end of the second communication unit 143, to send the battery data received by the processor 141 to the second communication unit 143. Further, the battery data is sent to the server through the second communication unit 143, and the battery data is stored through the server.

In some embodiments, the second communication unit 143 may be a mobile communication unit, for example, a 4G communication unit. The processor 141 may send the battery data to the 4G communication unit, and then the 4G communication unit sends the data to a base station, and further the data is stored on a cloud platform.

In some embodiments, the data transmission apparatus 100 further includes a housing, all the components of the data transmission apparatus 100 are electrically connected through a circuit board, the circuit board is packaged in the housing, all connection ends of the data transmission apparatus 100 are exposed through the housing, and all the connection ends include the power output connection end.

In an embodiment, all the components of the data transmission apparatus 100 are electrically connected through a circuit board, the circuit board is packaged in a housing, all connection ends of the data transmission apparatus 100 are exposed through the housing, and all the connection ends include the power output connection end.

According to this embodiment of this application, all the components of the data transmission apparatus 100 are connected to the circuit board and packaged in the housing. This can protect the data transmission apparatus 100, and facilitate assembly of the data transmission apparatus 100 and another component.

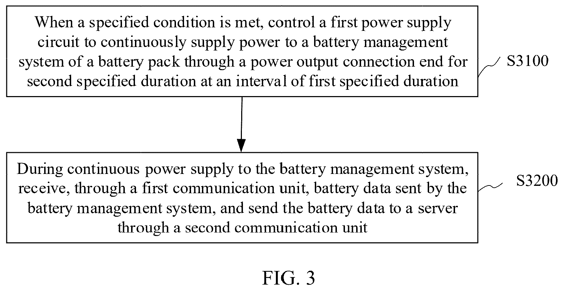

In some embodiments, as shown in FIG. 3, a control method for a data transmission apparatus 100 is further provided. The data transmission apparatus 100 is the data transmission apparatus 100 shown in FIG. 1 or FIG. 2, and the method is implemented by the processor 141 of the data transmission apparatus 100. The method includes:

Step S3100: when a specified condition is met, control the first power supply circuit 12 to continuously supply power to the battery management system of the battery pack 401 through the power output connection end for second specified duration at an interval of first specified duration.

In an embodiment, the specified condition may be power supply deficiency in the battery management system, or heartbeat deficiency based on the first communication unit 142, that is, the first communication unit 142 has not sent or received heartbeat data beyond preset time, or the first communication unit 142 does not receive the battery data sent by the battery management system within specified duration.

When the specified condition is met, it indicates that the battery management system may have power supply deficiency. The processor 141 controls the power output connection end of the data transmission apparatus 100 to maintain a connection to the power input connection end of the battery pack 401 for the second specified duration at the interval of the first specified duration. When the power output connection end of the data transmission apparatus 100 maintains the connection to the power input connection end of the battery pack 401, the first power supply circuit 12 may convert the output voltage of the battery component 11 into an operating voltage required for the battery management system, to continuously supply power to the battery management system.

In some embodiments, the first specified duration and the second specified duration may be duration set by a system by default. For example, the first specified duration may be set to 1 hour, and the second specified duration may be set to 2 minutes, that is, the processor 141 controls the first power supply circuit 12 to continuously supply power to the battery management system for 2 minutes at an interval of 1 hour.

In some other embodiments, the first specified duration and the second specified duration may be duration determined by the processor 141 based on a power storage capacity of the battery component 11. When the power storage capacity of the battery component 11 is larger, the first specified duration may be set to a smaller value, and the second specified duration may be set to a larger value. When the power storage capacity of the battery component 11 is smaller, the first specified duration may be set to a larger value, and the second specified duration may be set to a smaller value.

Step S3200: during continuous power supply to the battery management system, receive, through the first communication unit 142, the battery data sent by the battery management system, and send the battery data to the server through the second communication unit 143.

In this embodiment, during continuous power supply to the battery management system, the battery management system may obtain the battery data, and send the battery data to the first communication unit 142. The battery data may be data such as a voltage, a current, and a temperature of a battery. A person skilled in the art should understand that specific content of the battery data is not limited herein.

The first communication unit 142 receives the battery data sent by the battery management system, and sends the battery data to the processor 141. After receiving the battery data, the processor 141 sends the battery data to the server through the second communication unit 143.

According to this embodiment of this application, when the specified condition is met, the first power supply circuit 12 is controlled to continuously supply power to the battery management system of the battery pack 401 through the power output connection end for second specified duration at the interval of the first specified duration. During continuous power supply to the battery management system, the battery data sent by the battery management system is received through the first communication unit 142, and the battery data is sent to the server through the second communication unit 143. In this way, when the battery management system has power supply deficiency, the data transmission apparatus 100 can be controlled to supply power to the battery management system, thereby monitoring the battery data.

In some embodiments, the first specified duration is greater than the second specified duration.

In this embodiment, to reduce energy consumption of the battery component 11, the first specified duration may be set to be greater than the second specified duration. In this way, the battery data of the battery pack 401 can be monitored, power consumption of the data transmission apparatus 100 can be reduced, thereby prolonging a power supply life of the data transmission apparatus 100.

In some embodiments, the method further includes:
receiving the connection detection signal output by the connection detection circuit 16, wherein the connection detection circuit 16 is configured to detect whether the power input connection end of the data transmission apparatus 100 is connected to the external power supply; and

that the specified condition is met includes that the connection detection signal indicates that the power input connection end is not connected to the external power supply.

In this embodiment, the connection detection circuit 16 is configured to detect whether the power input connection end of the data transmission apparatus 100 is connected to the external power supply, and output a connection detection signal to the processor 141. When the connection detection signal output by the connection detection circuit 16 indicates that the power input connection end is connected to the external power supply, it indicates that the external power supply charges the battery component 11 through the charging circuit 15, and the operating voltage required for the data transmission apparatus 100 is provided through the second power supply circuit 13. In this case, the battery component 11 does not discharge, and the external power supply is connected to the power input connection end of the battery pack 401, to supply power to the battery management system of the battery pack 401.

When the connection detection signal output by the connection detection circuit 16 indicates that the power input connection end is not connected to the external power supply, it indicates that the external power supply does not supply power to the battery management system, and the battery management system has a power supply deficiency, that is, the specified condition is met. The processor 141 controls the first power supply circuit 12 to continuously supply power to the battery management system of the battery pack 401 through the power output connection end for second specified duration at the interval of the first specified duration.

According to this embodiment of this application, the connection detection signal output by the connection detection circuit 16 is received, so that when the connection detection signal indicates that the power input connection end is not connected to the external power supply, the data transmission apparatus 100 is controlled to supply power to the battery management system. This can facilitate power supply control of the data transmission apparatus 100.

In some embodiments, the controlling the first power supply circuit 12 to continuously supply power to the battery management system of the battery pack 401 through the power output connection end for second specified duration at an interval of first specified duration includes:
when a wake-up signal output by the clock wake-up circuit 17 is received, controlling the first power supply circuit 12 to be turned on, where the first power supply circuit 12 supplies power to the battery management system of the battery pack 401 through power output connection end when the first power supply circuit 12 is turned on, and the clock wake-up circuit 17 outputs the wake-up signal at the interval of the first specified duration when the processor 141 is in a sleep mode; and
when the first power supply circuit 12 is controlled to be turned on for the second specified duration, controlling the first power supply circuit 12 to be disconnected and enter a sleep state again.

In this embodiment, the clock wake-up circuit 17 outputs the wake-up signal 1 at the interval of the first specified duration when the processor 141 is in a sleep mode. For example, the clock wake-up circuit 17 outputs the wake-up signal at an interval of one hour.

When receiving the wake-up signal output by the clock wake-up circuit 17, the processor 141 controls the first power supply circuit 12 to be turned on. When the first power supply circuit 12 is turned on, the first power supply circuit 12 supplies power to the battery management system of the battery pack 401 through the power output connection end.

The processor 141 records duration for which the first power supply circuit 12 is turned on, and when the first power supply circuit 12 is turned on for the second specified duration, the processor 141 controls the first power supply circuit 12 to be disconnected and enter a sleep state.

In some examples, that the first power supply circuit 12 is turned on may be that the first switch in the first power supply circuit 12 is turned on.

According to this embodiment of this application, when the wake-up signal output by the clock wake-up circuit 17 is received, the first power supply circuit 12 is controlled to be turned on, and when the first power supply circuit 12 is controlled to be turned on for the second specified duration, the first power supply circuit 12 is controlled to be disconnected and enter a sleep state again. This can further reduce power consumption of the data transmission apparatus 100.

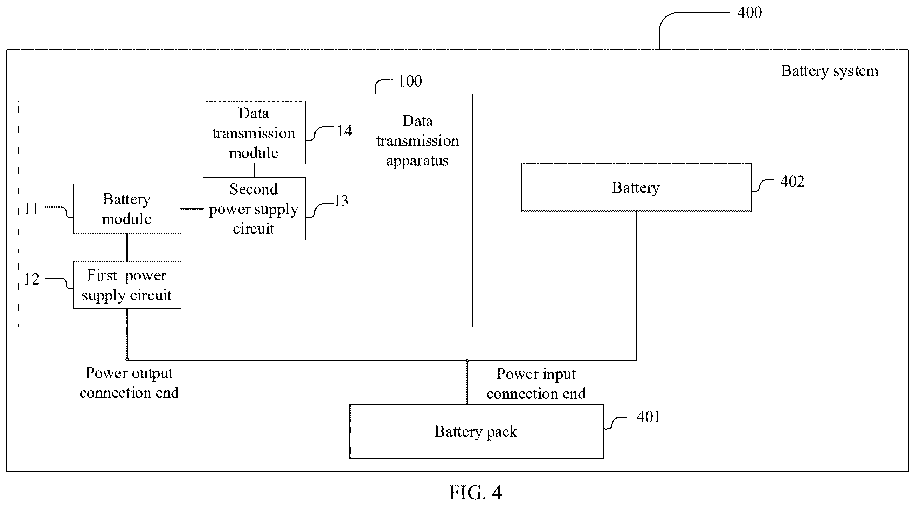

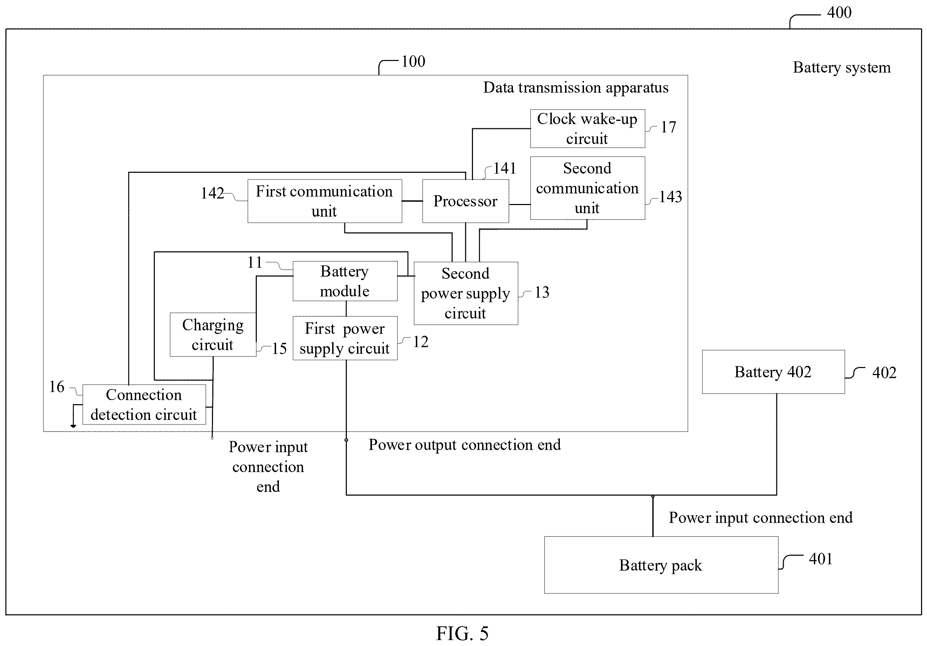

In some embodiments, as shown in FIG. 4 and FIG. 5, a battery system 400 is further provided. The battery system 400 includes: a battery pack 401, a battery 402, and the data transmission apparatus 100.

The battery pack 401 is provided with a battery management system. A power input connection end of the battery pack 401 is connected to the battery 402 and the power output connection end of the data transmission apparatus 100. The data transmission apparatus 100 may have a same or similar structure as the data transmission apparatus 100 shown in FIG. 1, or may have a same or similar structure as the data transmission apparatus 100 shown in FIG. 2. This is not limited herein.

In some embodiments, a power-consuming device is further provided. The power-consuming device includes the foregoing battery system 400, and the battery pack 401 of the battery system 40 is a power battery of the power-consuming device.

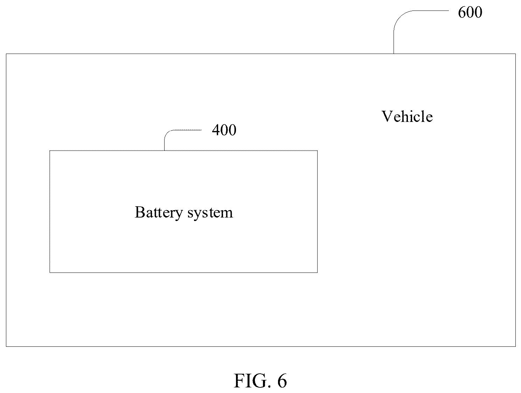

As a specific example, the power-consuming device may be a vehicle. Specifically, as shown in FIG. 6, a vehicle 600 includes the battery system 400 shown in FIG. 4 or the battery system 400 shown in FIG. 5. The battery pack 401 of the battery system 400 may be a power battery of the vehicle 600.

This application may be a system, a method, and/or a computer program product. The computer program product may include a computer-readable storage medium carrying computer-readable program instructions that are used to enable a processor to implement various aspects of this application.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoded device such as a punched card or a groove protrusion structure storing instructions on the punched card or the groove protrusion structure, and any suitable combination thereof. The computer-readable storage medium used herein is not to be construed as a transient signal, for example, a radio wave or another freely propagating electromagnetic wave, an electromagnetic wave propagating through a waveguide or another transmission medium (for example, a light pulse through an optical fiber cable), or an electrical signal transmitted through a wire.

The computer-readable program instructions described herein may be downloaded from the computer-readable storage medium to respective computing/processing devices or to an external computer or external storage device through a network, for example, the internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform operations in this application may be an assembly instruction, an instruction set architecture (ISA) instruction, a machine instruction, a machine-related instruction, microcode, a firmware instruction, status setting data, or source code or target code written in any combination of one or more programming languages. The programming languages include an object-oriented programming language such as Smalltalk or C++, and a conventional procedural programming language such as a "C" language or a similar programming language. The computer-readable program instructions may be executed entirely on a user computer, may be executed partially on a user computer as a standalone software package, may be executed partially on a user computer and partially on a remote computer, or may be executed entirely on a remote computer or a server. In a case in which a remote computer is involved, the remote computer may be connected to a user computer through any type of network, including a local area network (LAN) or a wide area network (WAN), or may be connected to an external computer (for example, through the internet provided by an internet service provider). In some embodiments, an electronic circuit, for example, a programmable logic circuit, a field programmable gate array (FPGA), or a programmable logic array (PLA), is customized by using status information of the computer-readable program instructions. The electronic circuit may execute the computer-readable program instructions, to implement the various aspects of this application.

The various aspects of this application are described herein with reference to the flowcharts and/or block diagrams of the method, the apparatus (system), and the computer program product according to embodiments of this application. It will be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded into a computer, another programmable data processing apparatus, or another device so that a series of operation steps is performed on the computer, another programmable data processing apparatus, or another device to produce a computer-implemented process. In this way, the instructions executed on the computer, another programmable data processing apparatus, or another device implements the functions/acts specified in the one or more blocks in the flowcharts and/or block diagrams.

The flowcharts and block diagrams in the accompanying drawings show possible implementations of system architectures, functions, and operations of systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function. It should also be noted that each block in the block diagrams and/or flowcharts, and a combination of blocks in the block diagrams and/or flowcharts may be implemented by special purpose hardware-based systems that perform a specified function or act, or may be implemented by combinations of special purpose hardware and computer instructions. It is well known to a person skilled in the art that implementation by hardware, implementation by software, and implementation by a combination of software and hardware are all equivalent.

The foregoing has described embodiments of this application. The foregoing descriptions are examples, not exhaustive, and are not limited to the disclosed embodiments. Many modifications and changes are clear to a person of ordinary skill in the art without departing from the scope and spirit of the illustrated embodiments. Selection of terms used in this specification is intended to best describe principles of embodiments, actual applications, or technical improvements to technologies in the market, or to enable another person of ordinary skill in the art to understand embodiments disclosed in this specification. The scope of this application is limited by the appended claims.

## Claims

1. A data transmission apparatus for a battery pack, wherein the battery pack (401) is provided with a battery management system, the data transmission apparatus (100) comprises a battery component (11), a first power supply circuit (12), a second power supply circuit (13), and a data transmission module (14) configured to communicatively connect to the battery management system, wherein
the data transmission module (14) is configured to receive and transmit battery data sent by the battery management system; and
the first power supply circuit (12) is electrically connected between the battery component (11) and a power output connection end of the data transmission apparatus (100); the battery component (11) is connected to an input end of the second power supply circuit (13); and an output end of the second power supply circuit (13) outputs a preset operating voltage of the data transmission apparatus (100).

2. The data transmission apparatus according to claim 1, wherein the power output connection end of the data transmission apparatus (100) is connected to a power input connection end of the battery management system.

3. The data transmission apparatus according to claim 1, wherein the data transmission apparatus (100) further comprises a charging circuit (15), and the charging circuit (15) is electrically connected between a power input connection end of the data transmission apparatus (100) and the battery component (11).

4. The data transmission apparatus according to claim 3, wherein the power input connection end is connected to the input end of the second power supply circuit (13).

5. The data transmission apparatus according to any one of claims 1 to 4, wherein the data transmission apparatus (100) further comprises a connection detection circuit (16) of an external power supply, the connection detection circuit (16) is electrically connected between the power input connection end of the data transmission apparatus (100) and a ground end of the data transmission apparatus (100); the connection detection circuit (16) comprises two resistors connected in series; and a potential point between the two resistors serves as an output end of the connection detection circuit (16), and outputs, to the data transmission module (14), a connection detection signal indicating whether the power input connection end is connected to the external power supply.

6. The data transmission apparatus according to any one of claims 1 to 5, wherein the first power supply circuit (12) comprises a first switch, and a control end of the first switch is connected to a processor of the data transmission module (14).

7. The data transmission apparatus according to any one of claims 1 to 6, wherein the data transmission apparatus (100) further comprises a clock wake-up circuit (17), and a wake-up signal output end of the clock wake-up circuit (17) is connected to a wake-up signal input end of the data transmission module (14).

8. The data transmission apparatus according to any one of claims 1 to 7, wherein the second power supply circuit (13) comprises a power supply module, and at least one voltage converter is disposed in the power supply module.

9. The data transmission apparatus according to any one of claims 1 to 8, wherein the data transmission module (14) comprises a first communication unit (142) configured to communicatively connect to the battery management system, a processor (141), and a second communication unit (143) configured to communicatively connect to a server;
the first communication unit (142) being configured to receive the battery data sent by the battery management system, wherein an output end of the first communication unit (142) is connected to the processor (141), to output the received battery data to the processor (141); and
an input end of the second communication unit (143) being connected to the processor (141), to receive the battery data sent by the processor (141), and send the received battery data to the server.

10. The data transmission apparatus according to claim 9, wherein the first communication unit (142) is a CAN communication unit, and/or the second communication unit (143) is a mobile communication unit.

11. The data transmission apparatus according to any one of claims 1 to 8, wherein the data transmission apparatus (100) further comprises a housing, all components of the data transmission apparatus (100) are electrically connected through a circuit board, the circuit board is packaged in the housing, all connection ends of the data transmission apparatus (100) being exposed through the housing, and all the connection ends comprising the power output connection end.

12. A control method for a data transmission apparatus, wherein the data transmission apparatus (100) is the data transmission apparatus (100) according to any one of claims 1 to 11, the method is implemented by the processor (141) of the data transmission apparatus (100), and the method comprises:
when a specified condition is met, controlling the first power supply circuit (12) to continuously supply power to the battery management system of the battery pack (401) through the power output connection end for second specified duration at an interval of first specified duration; and
during continuous power supply to the battery management system, receiving, through the first communication unit (142), the battery data sent by the battery management system, and sending the battery data to the server through the second communication unit (143).

13. The control method according to claim 12, wherein the first specified duration is greater than the second specified duration.

14. The control method according to claim 12 or 13, wherein the method further comprises:
receiving the connection detection signal output by the connection detection circuit (16), wherein the connection detection circuit (16) is configured to detect whether the power input connection end of the data transmission apparatus (100) is connected to the external power supply; and
that the specified condition is met comprises that the connection detection signal indicates that the power input connection end is not connected to the external power supply.

15. The method according to any one of claims 12 to 14, wherein the controlling the first power supply circuit (12) to continuously supply power to the battery management system of the battery pack (401) through the power output connection end for second specified duration at an interval of first specified duration comprises:
when a wake-up signal output by the clock wake-up circuit (17) is received, controlling the first power supply circuit (12) to be turned on, wherein the first power supply circuit (12) supplies power to the battery management system of the battery pack (401) through power output connection end when the first power supply circuit (12) is turned on, and the clock wake-up circuit (17) outputs the wake-up signal at the interval of the first specified duration when the processor (141) is in a sleep mode; and
when the first power supply circuit (12) is controlled to be turned on for the second specified duration, controlling the first power supply circuit (12) to be disconnected and enter a sleep state again.

16. A battery system, wherein the battery system (400) comprises:
a battery pack (401), wherein the battery pack (401) is provided with a battery management system;
a battery (402), wherein the battery (402) is electrically connected to a power input connection end of the battery pack (401); and
the data transmission apparatus (100) according to any one of claims 1 to 11, wherein the power output connection end of the data transmission apparatus (100) is electrically connected to the power input connection end of the battery pack (401).

17. A power-consuming device, comprising the battery system (400) according to claim 16, wherein the battery pack (401) of the battery system (400) is a power battery of the power-consuming device.
